# EUROPÄISCHE PATENTANMELDUNG

(11) **EP 1 038 423 A1**
(43) Veröffentlichungstag der Anmeldung: **27.09.2000**
(21) Anmeldenummer: 00106158.9
(22) Anmeldetag: 21.03.2000
(51) Int. Cl.: A01B 29/04, A01B 29/06

(54) **Vorrichtung zum Verfestigen des Bodens bei Bodenbearbeitungs- und Sävorgängen mit Hilfe von Stempelwerkzeugen**

(30) Priorität: 24.03.1999 DE 29905406 U
(71) Anmelder: Hendlmeier, Konrad, D-93107 Untersanding (DE)
(72) Erfinder: Hendlmeier, Konrad, D-93107 Untersanding (DE)
(74) Vertreter: Wasmeier, Alfons, Dipl.-Ing.

(57) **Zusammenfassung**

Bei einer Vorrichtung zum Verfestigen des Bodens für Bodenbearbeitungs- und Sävorgänge mit Hilfe von walzenförmigen Werkzeugen, insbesondere als Stempelräder ausgebildeten Stempelwerkzeugen, deren Stempelelemente einseitig mit der Achse befestigte abgewinkelte Federarme sind, wird vorgeschlagen, an einem parallel zur rotierenden Achse der Federstempelwalze verlaufenden Rahmenteil zwischen den Stempelrädern angeordnete feststehende Kammelemente zu befestigen, die in Fahrtrichtung hinter der Achse angeordnet sind, und die Kammelemente den Stempelelementen so zuzuordnen, dass sie schräg zur Teilumfangsfläche der Federelemente in den freien Raum zwischen den Federelementen eingreifen. Anstelle der Kammelemente oder zusätzlich zu den Kammelementen können Nivellierelemente vorgesehen sein, die in Fahrtrichtung vor der Achse angeordnet sind und die den Stempelelementen so zugeordnet sind, dass sie schräg zur Teilumfangsfläche der Federelemente in den freien Raum zwischen den Federelementen und durch den freien Raum hindurch bis zur Bodenoberfläche nach unten gebogen sind sowie auf der Bodenoberfläche schleifen und einen Druck ausüben.

## Beschreibung

Die Erfindung betrifft eine Vorrichtung nach dem Oberbegriff des Anspruches 1.

Eine derartige Vorrichtung ist z.B. aus DBGM 297 22 141 bekannt, mit der ein optimales Saatbeet dadurch erzielt wird, der Unterboden verfestigt und ausreichend Feinerde zum Bedecken des Saatgutes erzielt wird.

Die rotierenden Stempelelemente, die das Erdreich verfestigen, nehmen - insbesondere bei hoher Bodenfeuchtigkeit - vom Boden große Gluten auf oder bilden diese allmählich aus. Derartige Gluten klemmen sich zwischen den Stempelelementen fest und führen zu Verstopfungen der Stempelelemente. Aufgabe der Erfindung ist es, eine Vorrichtung anzugeben, mit der diese Gefahr beseitigt oder vermieden werden kann.

Gemäß der Erfindung wird dies mit den Merkmalen des Kennzeichens des Anspruches 1 oder des Anspruches 2 erreicht. Weitere Ausgestaltungen der Erfindung sind Gegenstand der Unteransprüche.

Die Kammelemente gemäß der Erfindung sind in Fahrtrichtung hinter und über der Achse am Rahmen befestigt und greifen in die freien Zwischenräume zwischen jeweils zwei benachbarten Stempelrädern reinigend in der Weise ein, dass Gluten, Pflanzenteile, Steine oder dgl., die sich im Betrieb zwischen zwei benachbarten Stempelrädern festsetzen bzw. festklemmen, und die den einwandfreien Arbeitsvorgang der Stempelwalze behindern, von den Stempelrädern gelöst und zerkleinert sowie abgeworfen werden, und dadurch der Raum zwischen den Stempelrädern befreit und gereinigt wird. Alternativ und/oder zusätzlich werden anstelle der oder einiger Kammelemente Nivellierelemente vorgesehen, die jeweils zwischen zwei benachbarte Stempelräder eingreifen und die in Fahrtrichtung vor der Achse am Rahmen befestigt sind sowie von ihrer Befestigungsstelle aus bogenförmig nach unten verlaufen. Die freien Enden dieser Nivellierelemente liegen federnd nachgiebig auf der Bodenoberfläche auf und üben einen entsprechenden Druck auf Gluten, Erdbrocken oder dergl. Unebenheiten aus.

Die Kammelemente wie auch die Nivellierelemente sind an einem Querrahmenträger fest verbunden, z.B. angeschweißt oder angeschraubt, oder sind Teil eines integralen Kammes, dessen Leiste mit dem Querrahmenträger fest verbunden ist. Zum Beispiel sind die Kammelemente oder Nivellierelemente als Flacheisen, Winkeleisen, Stäbe oder dgl. starr oder federnd nachgiebig, aus Metall oder Kunststoff ausgebildet. Vorzugsweise verlaufen die Kammelemente schräg nach vorne und unten in Richtung der Achse der Stempelwalze hinter der Achse und erstrecken sich etwa radial in den Bereich zwischen den Stempelrädern im Abstand von der Stempelwalzenachse, so dass der Aufbau einer Verstopfung durch Gluten etc. im Innenbereich zwischen den Stempelrädern sicher vermieden und verhindert wird, dass die eingeklemmten Gluten wiederholt vor die Achse transportiert werden.

Der Einsatz einer derartigen Vorrichtung mit Kammelementen erfolgt in der Regel hinter Kreiseleggen in einem Bereich, in dem ein Nivellieren des Bodens nicht erforderlich ist. Der Einsatz von Nivellierelementen ist vor allem zweckmässig bei Direktsämaschinen, Grubbern oder dergl., bei denen eine Nivellierung erforderlich ist. Die Nivellierelemente sind als Federelemente ausgebildet. Das freie Ende dieser Federelemente schleift auf der Erde und ragt über den Rotationsdurchmesser vor.

Wahlweise kann jedoch die Anordnung auch so getroffen werden, dass jeweils ein Kammelement zwischen jeweils zwei Stempelelementen in Achsrichtung kontinuierlich miteinander abwechselnd angeordnet ist, und dass in den versetzten Freiräumen bzw. Lückenbereichen zwischen zwei Stempelelementen feststehende Nivellierelemente angeordnet sind, die kontinuierlich auf die Bodenoberfläche einen Druck ausüben, so dass Kammelemente und Nivellierelemente in Achsrichtung miteinander abwechseln.

Nachstehend wird die Erfindung in Verbindung mit der Zeichnung anhand von Ausführungsbeispielen erläutert. Es zeigt:
- Fig. 1: eine perspektivische Ansicht eines Ausschnittes aus einer Stempelwalze,von der nur zwei Stempelräder, jeweils aus drei Federn bestehend, und zwei Kammelemente dargestellt sind,
- Fig. 2: eine andere Ausführungsform einer Stempelwalze, wie in Fig. 1 dargestellt, mit zwei Kammelementen und zwei Stempelrädern, die jeweils aus vier Federn bestehen,
- Fig. 3: eine weitere Ausführungsform der Erfindung, bei der Kammelemente mit Nivellerelementen vorgesehen sind, und
- Fig. 4: eine perspektivische Darstellung entsprechend der Fig. 3, jedoch ohne Kammelemente.

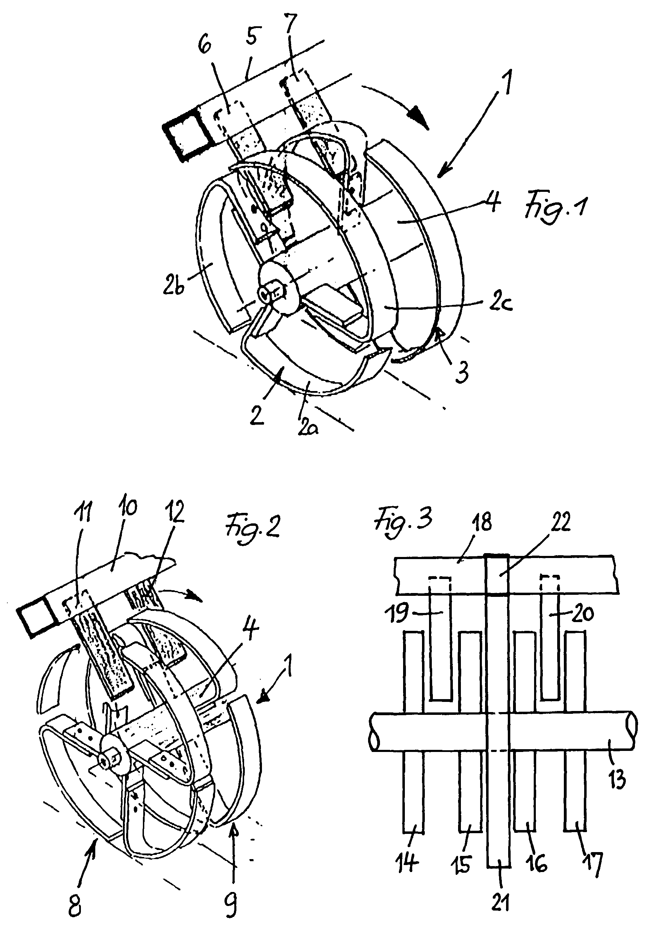

Die perspektivische Darstellung nach Fig. 1 zeigt eine Stempelwalze 1 mit Stempelrädern 2, 3, die aus drei Stempelelementen oder Federelementen 2a, 2b, 2c bzw. 3a, 3b, 3c bestehen und die auf einer durchgehenden, rotierenden Achse 4 befestigt sind. An einem durchgehenden Querrahmenträger 5, z.B. einem Vierkantrohr, sind Kammelemente 6, 7 befestigt, z.B. angeschweißt, die in den freien Raum zwischen den Stempelrädern 2, 3 hineinragen und die zwischen den Stempelrädern eingeklemmte Gluten oder dgl. beseitigen.

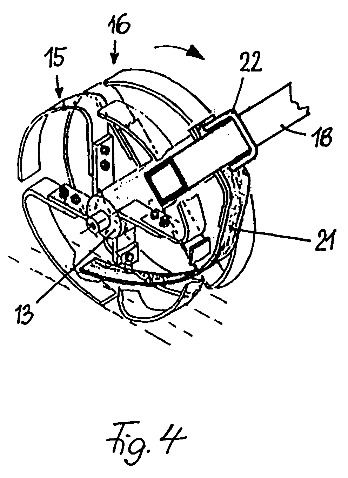

Fig. 2 zeigt eine ähnliche Ausführungsform wie nach Fig. 1. Hier besteht ein Stempelrad 8 aus vier Federn 8a, 8b, 8c, 8d. Analog der Darstellung nach der Fig. 1 sind auch bei dieser Ausführungsform auf einem Querträger 10 Kammelemente 11, 12 befestigt, die mit den Zwischenräumen zwischen jeweils zwei benachbarten Stempelrädern 8, 9 zusammenwirken. Die gesamte Stempelwalze besteht bei beiden Ausführungsformen aus einer Vielzahl von parallel zueinander auf der Achse 4 befestigten Stempelrädern und einer gleich großen Anzahl von auf dem Träger 10 befestigten Kammelementen. Die Kammelemente 6, 7 bzw. 11, 12 können Zähne einer Kammleiste sein, die sich über den gesamten Querträger 10 erstrecken, wobei die Kammleiste mit dem Querträger 10 befestigt, z.B. verschweißt ist.

Die Ausführungsform nach Fig. 3 zeigt eine Frontansicht und die Fig. 4 eine perspektivische Ansicht einer anderen Ausführungsform der Erfindung. Auf einer rotierenden Achse 13 sind eine Vielzahl von parallel nebeneinander angeordneten Stempelrädern 14, 15, 16, 17 befestigt. Ein Querträger 18 des Maschinenrahmens, der über der Stempelwalze angeordnet ist, weist Kammelemente 19, 20 auf, deren jedes zwischen zwei benachbarten Stempelrädern 14, 15; 16, 17 angeordnet ist, während in den Lücken zwischen jeweils zwei Stempelrädern 15, 16 jeweils ein Nivellierelement 21 vorgesehen ist das an einer Halterung 22 des Querträgers 18 aufgenommen wird. Die Nivellierelemente 21 schleifen mit ihrem untersten, gebogenen Abschnitt 23 auf der Bodenoberfläche und bewirken dort eine Nivellierung. Im praktischen Einsatz kann in bestimmten Fällen auf die Einschaltung von Kammelementen zugunsten von Nivellierelementen verzichtet werden. Die Nivellierelemente sind als Zwischenfedern ausgebildet. Der Einsatz einer derartigen Anordnung erfolgt in Verbindung mit Direktsämaschinen, Grubbern oder dgl., bei denen eine Nivellierung erforderlich ist.

## Patentansprüche

1. Vorrichtung zum Verfestigen des Bodens bei Bodenbearbeitungs- und Sävorgängen mit Hilfe von walzenförmigen oder radförmigen Werkzeugen, insbesondere als Stempelräder ausgebildeten Stempelwerkzeugen, die auf einer horizontalen Achse umlaufend angeordnet sind und radial nach außen gerichtete Stempelemente aufweisen, welche als einseitig mit der Achse befestigte sichelförmige Elemente bzw. abgewinkelte Federarme ausgebildet sind, deren mit der Achse befestigter innerer Abschnitt radial nach außen verläuft und deren äußerer, an den inneren Abschnitt anschließender Abschnitt ein dem Umkreis angepaßter, federnd nachgiebig ausgebildeter Teilkreis ist, und dessen freies Ende zum in Umfangsrichtung benachbarten Stempelelement auslenkbar und beabstandet ist, **dadurch gekennzeichnet**, dass an einem parallel zur rotierenden Achse der Federstempelwalze (1, 8) verlaufenden Rahmenteil (5, 10) zwischen den Stempelrädern (2, 3; 8, 9; 14 - 17) angeordnete feststehende Kammelemente (6, 7; 11, 12) starr befestigt sind, dass die Kammelemente in Fahrtrichtung gesehen hinter der Achse (4) angeordnet sind, und dass die Kammelemente den Stempelelementen so zugeordnet sind, dass sie schräg zur Teilumfangsfläche der Federelemente (2a, 2b, 2c; 3a, 3b, 3c) und in den freien Raum zwischen den Federelementen eingreifend verlaufen.

2. Vorrichtung zum Verfestigen des Bodens bei Bodenbearbeitungs- und Sävorgängen mit Hilfe von walzenförmigen oder radförmigen Werkzeugen, insbesondere als Stempelräder ausgebildeten Stempelwerkzeugen, die auf einer horizontalen Achse umlaufend angeordnet sind und radial nach außen gerichtete Stempelemente aufweisen, welche als einseitig mit der Achse befestigte sichelförmige Elemente bzw. abgewinkelte Federarme ausgebildet sind, deren mit der Achse befestigter innerer Abschnitt radial nach außen verläuft und deren äußerer, an den inneren Abschnitt anschließender Abschnitt ein dem Umkreis angepaßter, federnd nachgiebig ausgebildeter Teilkreis ist, und dessen freies Ende zum in Umfangsrichtung benachbarten Stempelelement auslenkbar und beabstandet ist, dadurch gekennzeichnet, dass an einem parallel zur rotierenden Achse der Federstempelwalze (1, 8) verlaufenden Rahmenteil (18) zwischen jeweils zwei benachbarten Stempelrädern (15, 16) angeordnete Nivellierelemente (21) befestigt sind, dass die Nivellierelemente in Fahrtrichtung gesehen vor der Achse (13) angeordnet sind, und dass die Nivellierelemente den Stempelelementen so zugeordnet sind, dass sie schräg zur Teilumfangsfläche der Federelemente (14, 15, 16, 17) und in den freien Raum zwischen den Federelementen eingreifend sowie bis zur Bodenoberfläche nach unten gebogen und auf die Bodenoberfläche einen elastisch nachgiebigen Druck ausübend verlaufen.

3. Vorrichtung nach Anspruch 1, dadurch gekennzeichnet, dass jeweils ein Kammelement (6, 7) und ein benachbartes Stempelrad (2, 3) in Achsrichtung miteinander abwechselnd angeordnet sind.

4. Vorrichtung nach Anspruch 2, dadurch gekennzeichnet, dass jeweils ein Kammelement (19, 20) und zwei Stempelräder (14, 15 16, 17) in Achsrichtung miteinander abwechselnd angeordnet sind, und dass in den Freiräumen bzw. Lückenbereichen zwischen zwei Kammelementen (19, 20) und zwei Stempelrädern (15, 16) jeweils ein Nivellierelement (21) angeordnet ist, das kontinuierlich auf die Bodenoberfläche einen Druck ausübt.

5. Vorrichtung nach einem der Ansprüche 1 - 4, dadurch gekennzeichnet, dass die Kammelemente und/oder die Nivellierelemente auf einer gemeinsamen, mit dem Rahmenteil befestigten Leiste verbunden sind.

6. Vorrichtung nach einem der Ansprüche 1 - 5, dadurch gekennzeichnet, dass die Kammelemente und/oder die Nivellierelemente Flacheisen sind.

7. Vorrichtung nach einem der Ansprüche 1 - 5, dadurch gekennzeichnet, dass die Kammelemente und/oder die Nivellierelemente federnd nachgiebige Stäbe, Schienen oder dergl. sind, die aus Metall, Gummi (Gewebegummi) oder dergl. bestehen.

8. Vorrichtung nach einem der Ansprüche 1 - 7, dadurch gekennzeichnet, dass die Breite der Kammelemente bzw. der Nivellierelemente kleiner als der Abstand zweier benachbarter Stempelelemente ist.
